# EUROPEAN PATENT APPLICATION

(11) **EP 3 203 781 A1**
(43) Date of publication of application: **09.08.2017**
(21) Application number: 14903346.6
(22) Date of filing: 29.11.2014
(51) Int. Cl.: H04W 48/18

(54) **NETWORK SELECTION METHOD AND APPARATUS BASED ON COMMUNICATIONS TERMINAL, AND TERMINAL**

(30) Priority: 30.09.2014 CN 201410524886
(71) Applicant: Yulong Computer Telecommunication Scientific (Shenzhen) Co. Ltd., Shenzhen, Guangdong 518057 (CN)
(72) Inventor: MIN, Zhenfa, Shenzhen Guangdong 518057 (CN)
(74) Representative: Cordina, Kevin John
(86) International application number: PCT/CN2014/092611
(87) International publication number: WO 2016/049977

(57) **Abstract**

The present disclosure is applicable to communication technology field and provides a network selection method based on a communication terminal, the method including steps of: setting matching networks for different applications; in response to received data of an application, selecting a network that is matched with the application; forwarding the received data to the selected network. Correspondingly, the present disclosure also provides a network selection device based on a communication terminal and a terminal. The present disclosure can allocate different networks to different applications for data transmission, so that network resources can be utilized sufficiently and connection speed and quality of service of the applications are ensured.

## Description

### CROSS-REFERENCE TO RELATED APPLICATIONS

This application claims priority of Chinese Patent Application No. 201410524886.X, entitled "network selection method and network selection device," filed on September 30, 2014 in the SIPO (State Intellectual Property Office of the People's Republic of China), the entire contents of which are incorporated by reference herein.

### FIELD

The embodiments of the present disclosure relate to communication technology, and specifically to a network selection method based on a communication terminal, a device, and a terminal.

### BACKGROUND

When a user uses a mobile phone or any other communication terminal, the user may enable both of a Wireless Fidelity (Wi-Fi) network and a mobile network, the mobile network may be General Packet Radio Service (GPRS) network, 3rd-Generation (3G) network, Long Term Evolution (LTE) network of the fourth generation of wireless mobile telecommunications technology (4G) network, for example. The communication terminal may select one network to be a main connection mode to connect, that is, all traffic is used to connect the network through the main connection mode. The other network is regarded as a backup connection mode, which is enabled only when the main connection mode is unavailable. This has the advantage of being simple to realize, without considering complex routing conditions, but this approach does not make full use of network resources of the mobile network and the Wi-Fi network.

In conclusion, the prior art obviously has shortcomings in actual use and is inconvenient, so it is necessary to improve.

### SUMMARY

Regarding the above-mentioned shortcomings, the objective of the present invention is to provide a network selection method based on a communication terminal, a device, and a terminal, different networks can be allocated to different applications for data transmission, thus network resources are reasonably utilized, and connection speed and quality of service of the applications are ensured.

To realize the above mentioned objective, the present disclosure provides a network selection method based on a communication terminal, the network selection method includes steps of:
setting matching networks for different applications;
in response to received data of an application, selecting a network that is matched with the application;
forwarding the received data to the selected network.

According to the network selection method of the present disclosure, the step of setting matching networks for different applications includes:
setting matching quality of service (QoS) level for the different applications;
setting matching networks for different QoS levels;
after the step of setting matching networks for different applications, the method further includes:
writing a QoS level of the application in a message to be sent by the application;
the step of in response to received data of an application, selecting a network that is matched with the application includes:
acquiring the QoS level of the application in the message when the message of the application is received;
selecting the network that is matched with the acquired QoS level;
the step of forwarding the received data to the selected network includes:

forwarding the message to a port of the selected network for data transmission.

According to the network selection method of the present disclosure, the step of writing a QoS level of the application in a message to be sent by the application includes: writing the QoS level of the application in a QoS field of a header of the message to be sent by the application.

According to the network selection method of the present disclosure, the networks at least include Wireless Fidelity (Wi-Fi) networks and mobile networks, and the communication terminal supports the Wi-Fi networks and the mobile networks.

According to the network selection method of the present disclosure, the step of setting matching networks for different applications includes:
setting applications whose average traffic volumes reach a predetermined traffic threshold to match the Wi-Fi networks; and
setting applications whose average traffic volumes do not reach the predetermined traffic threshold to match the mobile networks.

The present disclosure further provides a network selection device based on a communication terminal, including:
a setting module configured to set matching networks for different applications;
a network selection module configured to select a network that is matched with an application in response to received data of the application;
a data forwarding module configured to forward the received data to the selected network.

According to the network selection device of the present disclosure, the setting module includes:
a first setting sub-module configured to set matching quality of service (QoS) level for the different applications;
a second setting sub-module configured to set matching networks for different QoS levels;
the network selection device further includes:
   a QoS writing module configured to write a QoS level of the application in a message to be sent by the application;
   the network selection module includes:
   an acquiring sub-module configured to acquire the QoS level of the application in the message when the message of the application is received;
   a selection sub-module configured to select the network that is matched with the acquired QoS level;
   the data forwarding module configured to forward the message to a port of the selected network for data transmission.

According to the network selection device of the present disclosure, the QoS writing module is configured to write the QoS level of the application in a QoS field of a header of the message to be sent by the application.

According to the network selection device of the present disclosure, the networks at least include Wireless Fidelity (Wi-Fi) networks and mobile networks, and the communication terminal supports the Wi-Fi networks and the mobile networks.

The present disclosure further provides a terminal, the terminal includes the network selection device based on the terminal of any embodiments as mentioned above.

The communication terminal of the present disclosure sets matching networks for different applications, preferably matches networks according to QoS of the applications; and forwards application data to a matched network for data transmission. By the way, the present disclosure can allocate the different networks to the different applications for the data transmission, thus the network resources are utilized reasonably, the connection speed and the QoS of the applications are ensured, and user experience is improved.

### BRIEF DESCRIPTION OF THE DRAWINGS

FIG. 1 is a schematic diagram of a network selection device based on a communication terminal of the present disclosure;
FIG. 2 is a schematic diagram of a preferred network selection device based on the communication terminal of the present disclosure;
FIG. 3 is a flowchart of a network selection method based on the communication terminal of the present disclosure;
FIG. 4 is a flowchart of a preferred network selection method based on the communication terminal of the present disclosure.

### DETAILED DESCRIPTION

For clarity of illustration of objectives, features and advantages of the present disclosure, where appropriate, the above drawings combined with detailed description illustrate the embodiments of the present disclosure hereinafter. It should be noted that, the embodiments described herein are for merely interpreting the present disclosure, but not for limiting the scope of the present disclosure.

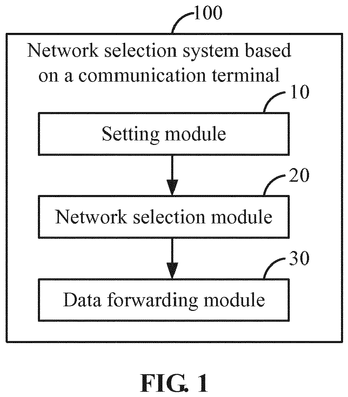

FIG. 1 is a schematic diagram of a network selection device based on a communication terminal of the present disclosure, the network selection device 100 can be applied in a mobile phone, a personal digital assistant (PDA), a tablet computer, or any other communication terminal, and the network selection device 100 at least includes a setting module 10, a network selection module 20, and a data forwarding module 30, in which:

The setting module 10, is configured to set matching networks for different applications, default settings may be made by the device or customized settings may be made by a user. Preferably, the applications are all kinds of applications installed in the communication terminal, such as video applications, browsers, chat applications, and game applications, for example. The networks at least include Wireless Fidelity (Wi-Fi) networks and mobile networks, and the communication terminal supports the Wi-Fi networks and the mobile networks. The mobile networks may be General Packet Radio Service (GPRS) networks, 3rd-Generation (3G) networks, and Long Term Evolution (LTE) networks, for example. Two or more than two mobile networks can be supported by a dual-mode communication terminal. It is better that the setting module 10 is configured to set applications whose average traffic volumes reach a predetermined traffic threshold to match the Wi-Fi networks, for example, the video applications, the game applications and other applications that require large traffic volumes can be set to match the Wi-Fi networks, so as to avoid wasting traffic volumes of a user; the setting module 10 is configured to set applications whose average traffic volumes do not reach the predetermined traffic threshold to match the mobile networks, for example, the browsers, the chat applications, and other applications that require less traffic volumes can be set to match the mobile networks, so as to ensure stability in using the applications.

The network selection module 20, is configured to select a network that is matched with an application in response to received data of the application. When the communication terminal receives data sent from the application, the application that the received data belongs to can be analyzed, and then a network can be selected to match the application. For example, if data of the video applications or the game applications is received, a matched Wi-Fi network is selected, if data of the chat applications or the game applications is received, a matched mobile network is selected.

The data forwarding module 30, is configured to forward the received data to the selected network for data transmission.

The present disclosure applies to 2G, 3G, or 4G networks. The communication terminal can allocate different networks to different applications, utilize advantages of different networks, utilize network resources reasonably, and improve user experience greatly.

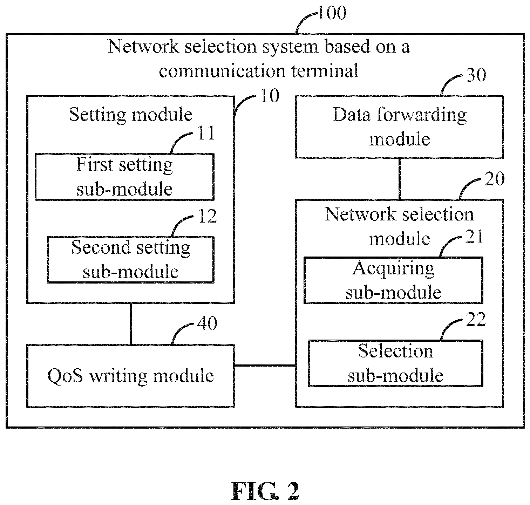

FIG. 2 is a schematic diagram of a preferred network selection device based on the communication terminal of the present disclosure, the network selection device 100 can be applied in the mobile phone, the PDA, the tablet computer, or any other communication terminal, and the network selection device 100 includes a setting module 10, a network selection module 20, a data forwarding module 30 and a quality of service (QoS) writing module 40, in which:

The setting module 10, is configured to set matching networks for different applications. Preferably, the networks at least include the Wi-Fi networks and the mobile networks, and the communication terminal supports the Wi-Fi networks and the mobile networks. It is better that the setting module 10 includes:

A first setting sub-module 11, is configured to set matching QoS level for the different applications. The QoS indicates an ability that a network can provide higher priority service, including a dedicated bandwidth, jitter control and delay, improvements of a packet loss rate and designated network traffic using different network technologies, etc, and can insure a priority provided to each data flow not to impede other data flows. Setting the matching QoS level for the different applications, such as, setting a low level of QoS for the video applications and the game applications, and setting a high level of QoS for the browsers and the chat applications, for example.

A second setting sub-module 12, is configured to set matching networks for different QoS levels. For example, the low level of QoS is set to match the Wi-Fi networks, and the high level of QoS is set to match the LTE network or other mobile networks, that is, the video applications and the game applications can be set to match the Wi-Fi networks, and the browsers and the chat applications can be set to match the LTE network.

The QoS writing module 40, is configured to write a QoS level of the application in a message to be sent by the application, the message is a data unit for exchange and transmission in the networks. Preferably, the QoS writing module 40 is configured to write the QoS level of the application in a QoS field of a header of the message to be sent by the application, the header is a header data structure of the message.

The network selection module 20 includes:
An acquiring sub-module 21, is configured to acquire the QoS level matched the application in the message when the message of the application is received. Preferably, data in the QoS field of the header of the message is acquired.

A selection sub-module 22, is configured to select the network that is matched with the acquired QoS level. For example, the Wi-Fi network is selected if the acquired QoS level is a low level of QoS and the LTE network is selected if the acquired QoS level is a high level of QoS, so that different networks can be selected according to different QoS levels.

The data forwarding module 30, is configured to forward the message to a port of the selected network for data transmission.

The present disclosure further provides a terminal, the terminal includes the network selection device based on the communication terminal of any embodiments as mentioned above.

The present disclosure preferably provides a mechanism to select networks according to QoS of the applications, a network channel can be determined according to a QoS option in the message, so as to determine different network connection ways for different traffic according to types of the applications. By combining respective advantages of the mobile networks and the Wi-Fi networks, current network resources can be utilized sufficiently, the connection speed and the quality of service of the applications are ensured, and the user experience is improved.

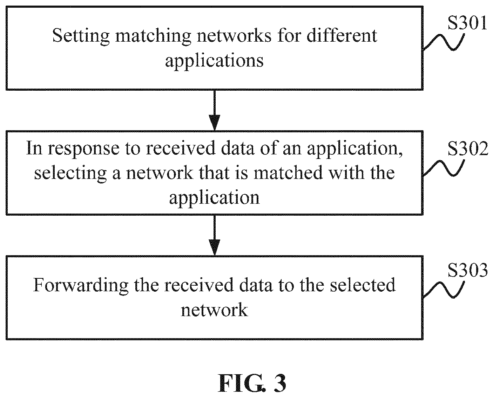

FIG. 3 is a flowchart of a network selection method based on the communication terminal of the present disclosure, the method can be implemented by using the network selection device 100 of FIG. 1 or FIG. 2, and includes steps of:
Step S301, setting matching networks for different applications.

In the step, default settings may be made by the device or customized settings may be made by a user. Preferably, the applications are all kinds of applications installed in the communication terminal, such as video applications, browsers, chat applications, game applications, for example. The networks at least include Wi-Fi networks and mobile networks, and the communication terminal supports the Wi-Fi networks and the mobile networks. The mobile networks may be GPRS networks, 3G networks, LTE networks, for example. Two or more than two mobile networks can be supported by a dual-mode communication terminal. It is better that, applications whose average traffic volumes reach a predetermined traffic threshold can be set to match the Wi-Fi networks, for example, the video applications, the game applications and other applications that require large traffic volumes can be set to match the Wi-Fi networks, so as to avoid wasting traffic volumes of a user; applications whose average traffic volumes do not reach the predetermined traffic threshold can be set to match the mobile networks, for example, the browsers, the chat applications, and other applications that require less traffic volumes can be set to match the mobile networks, so as to ensure stability in using the applications.

Step S302, in response to received data of the application, selecting a network that is matched with an application. When the communication terminal receives data sent from the application, the application that the received data belongs to can be analyzed, and then a network can be selected to match the application. For example, if data of the video applications or the game applications is received, a matched Wi-Fi network is selected, if data of the chat applications or the game applications is received, a matched mobile network is selected.

Step S303, forwarding the received data to the selected network for data transmission.

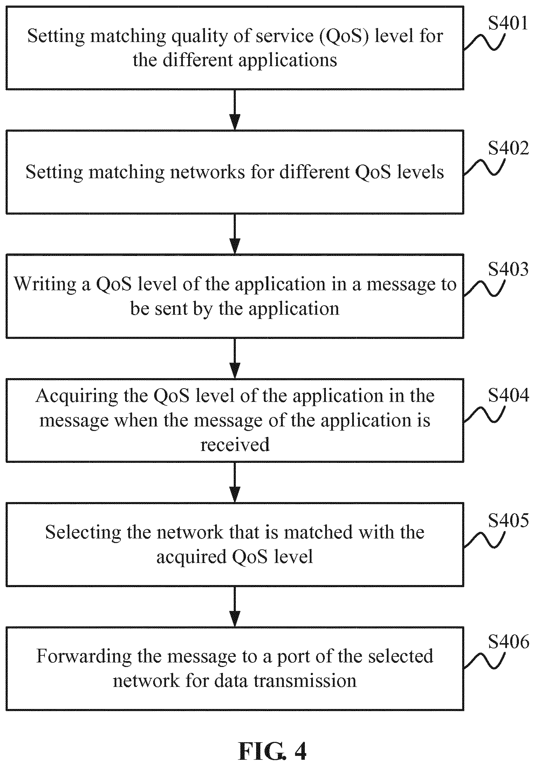

FIG. 4 is a flowchart of a preferred network selection method based on the communication terminal of the present disclosure, the method can be implemented by using the network selection device 100 of FIG. 2, and includes steps of:
Step S401, setting matching QoS level for the different applications.

The QoS indicates an ability that a network can provide higher priority service, including a dedicated bandwidth, jitter control and delay, improvements of a packet loss rate and designated network traffic using different network technologies, etc, and can insure a priority provided to each data flow not impeding other data flows. Setting the matching QoS level for the different applications, such as, setting a low level of QoS for the video applications and the game applications, and setting a high level of QoS for the browsers and the chat applications, for example.

Step S402, setting matching networks for different QoS levels.

For example, the low level of QoS is set to match the Wi-Fi networks, and the high level of QoS is set to match the LTE network or other mobile networks, that is, the video applications and the game applications are set to match the Wi-Fi networks, and the browsers and the chat applications are set to match the LTE network.

Step S403, writing a QoS level of the application in a message to be sent by the application.

Preferably, the QoS level of the application is wrote into a QoS field of a header of the message to be sent by the application, the header is a header data structure of the message.

Step S404, when the message of the application is received, acquiring the QoS level matched the application in the message.

Preferably, data in the QoS field of the header of the message is acquired.

Step S405, selecting the network that is matched with the acquired QoS level.

For example, the Wi-Fi network is selected if the acquired QoS level is a low level of QoS and the LTE network is selected if the acquired QoS level is a high level of QoS, so that different networks can be selected according to different QoS levels.

Step S406, forwarding the message to a port of the selected network for data transmission.

In conclusion, the communication terminal provided by the present disclosure can set the matching networks for different applications, preferably match the networks according to QoS of the applications; and forward application data to a matching network for data transmission. Accordingly, the present disclosure can allocate different networks to different applications for data transmission, so that the network resources can be utilized sufficiently, the connection speed and the quality of service of the applications are ensured, and the user experience is improved.

Certainly, other more embodiments can be provided by the present disclosure, various changes or modifications may be made to the present disclosure by a person having ordinary skill in the art without departing from the scope and spirit of the present disclosure, all such changes or modifications are within the scope of the protection of claims in the present disclosure.

## Claims

1. A network selection method based on a communication terminal, comprising:
setting matching networks for different applications;
in response to received data of an application, selecting a network that is matched with the application;
forwarding the received data to the selected network.

2. The network selection method of claim 1, wherein:
the step of setting matching networks for different applications comprises:
setting matching quality of service (QoS) level for the different applications;
setting matching networks for different QoS levels;
after the step of setting matching networks for different applications, the method further comprises:
writing a QoS level of the application in a message to be sent by the application;
the step of in response to received data of an application, selecting a network that is matched with the application comprises:
acquiring the QoS level of the application in the message when the message of the application is received;
selecting the network that is matched with the acquired QoS level;
the step of forwarding the received data to the selected network comprises:
forwarding the message to a port of the selected network for data transmission.

3. The network selection method of claim 2, wherein the step of writing a QoS level of the application in a message to be sent by the application comprises:
writing the QoS level of the application in a QoS field of a header of the message to be sent by the application.

4. The network selection method of any of claims 1 to 3, wherein the networks at least comprise Wireless Fidelity (Wi-Fi) networks and mobile networks, and the communication terminal supports the Wi-Fi networks and the mobile networks.

5. The network selection method of claim 4, wherein the step of setting matching networks for different applications comprises:
setting applications whose average traffic volumes reach a predetermined traffic threshold to match the Wi-Fi networks;
setting applications whose average traffic volumes do not reach the predetermined traffic threshold to match the mobile networks.

6. A network selection device based on a communication terminal, comprising:
a setting module configured to set matching networks for different applications;
a network selection module configured to select a network that is matched with an application in response to received data of the application;
a data forwarding module configured to forward the received data to the selected network.

7. The network selection device of claim 6, wherein:
the setting module comprises:
a first setting sub-module configured to set matching quality of service (QoS) level for the different applications;
a second setting sub-module configured to set matching networks for different QoS levels;
the network selection device further comprises:
a QoS writing module configured to write a QoS level of the application in a message to be sent by the application;
the network selection module comprises:
an acquiring sub-module configured to acquire the QoS level of the application in the message when the message of the application is received;
a selection sub-module configured to select the network that is matched with the acquired QoS level;
the data forwarding module configured to forward the message to a port of the selected network for data transmission.

8. The network selection device of claim 7, wherein the QoS writing module is configured to write the QoS level of the application in a QoS field of a header of the message to be sent by the application.

9. The network selection device of any of claims 6 to 8, wherein the networks at least comprise Wireless Fidelity (Wi-Fi) networks and mobile networks, and the communication terminal supports the Wi-Fi networks and the mobile networks.

10. A terminal, comprising the device of any of claims 6 to 8.
